# EUROPÄISCHE PATENTSCHRIFT

(11) **EP 2 276 130 B1**
(45) Veröffentlichungstag und Bekanntmachung des Hinweises auf die Patenterteilung: **09.08.2017**
(21) Anmeldenummer: 10006752.9
(22) Anmeldetag: 30.06.2010
(51) Int. Cl.: H02G 3/04, H02G 3/06

(54) **Endgehäuse für ein elektrisches Kabel**
End housing for an electric cable
Boîtier terminal pour un câble électrique

(30) Priorität: 17.07.2009 DE 102009033778
(43) Veröffentlichungstag der Anmeldung: 19.01.2011
(73) Patentinhaber: Damm, Hans, 76473 Iffezheim (DE)
(72) Erfinder: Damm, Hans, 76473 Iffezheim (DE)
(74) Vertreter: Petersen, Frank

(56) Entgegenhaltungen:
- DE-A1- 3 439 784
- DE-B- 1 150 424
- US-A- 5 064 226
- US-B1- 6 932 390

## Beschreibung

Die Erfindung betrifft ein Endgehäuse für ein Kabel mit einem Abschlusselement und einem sich an dieses Abschlusselement anschließenden Kabelführungsrohr gemäß dem Oberbegriff des beigefügten Hauptanspruches.

Es ist bekannt, bei den verschiedensten Einsatzzwecken elektrische Kabel in der Nähe eines Abschlusselementes mit einem sich an dieses Abschlusselement anschließenden Kabelführungsrohr zu versehen. Unter einem Abschlusselement kann dabei sowohl ein Stecker oder eine Buchse verstanden werden oder aber auch eine Kabeldurchführung an einem Bauelement oder Bauteil. Das sich an dieses Abschlusselement anschließende Kabelführungsrohr kann eine Art Knickschutz für das Kabel sein oder aber auch ein Übergang von dem Abschlusselement in einen Kabelkanal o. ä.

In gewissen Einsatzgebieten, wie beispielsweise im Verkehrsflugzeugbau werden unter den unterschiedlichsten Gesichtspunkten Kabel zum großen Teil in relativ starren Kabelkanälen verlegt. Wenn ein solcher Kabelkanal auf ein Gehäuse trifft, wird an dem Kabelkanal ein Endgehäuse vorgesehen, so dass das Kabel in das Gehäuse eintreten kann. Dieses Endgehäuse ist durch ein Kabelführungsrohr mit dem Kabelkanal verbunden und über ein Abschlusselement mit der Gehäusewand. Das Abschlusselement kann dabei sowohl einen Stecker oder eine Buchse als auch nur eine Kabeldurchführung aufweisen.

Wenn nun die Gehäusewand nicht genau senkrecht zu der Mittelachse des Kabelkanals verläuft, muss ein Endgehäuse vorgesehen werden, durch das das Kabel geführt wird, das den Winkel zwischen der Gehäusewand und der Mittelachse des Kabelkanals ausgleicht,

Es ist diesbezüglich bekannt, für die sich ergebenden unterschiedlichen Winkel jeweils unterschiedliche Endgehäuse mit jeweils passenden Winkeln zwischen Abschlusselement und Kabelführungsrohr vorzusehen. Hierfür ist eine insgesamt umfangreiche Lagerhaltung von einer Vielzahl an Endstücken für unterschiedlichste Winkel notwendig.

Selbst diese verhindert aber nicht, dass bei einer auch nur leichten Abweichung in dem zu überbrückenden Winkel kein exakt passendes Winkelstück vorhanden ist, um den Winkel ganz präzise ausgleichen zu können. Wenn ein mit einem Endgehäuse auszugleichender Winkel nur leicht von dem Winkel abweicht, für den ein spezielles Endgehäuse vorliegt, ist eine Montage des Endgehäuses ggf. nur mit einer unerwünschten Verspannung möglich.

Um dies zu vermeiden, wird in der US - 6 932 390 vorgeschlagen, dass bei einem Endgehäuse das Abschlusselement und das Kabelführungsrohr als zwei Teile ausgeführt sind, die an einer gegenüber einer Mittelachse des Abschlusselementes geneigten Flanscheinheit miteinander verbunden sind.

Der Vorteil einer solchen Vorrichtung liegt darin, dass es durch die geneigte Flanscheinheit möglich ist, Abschlusselement und Kabelführungsrohr gegeneinander zu verdrehen, wobei sich der Winkel zwischen der Mittelachse des Abschlusselementes und einer Mittelachse des Kabelführungsrohres verändert.

Damit ist es möglich, das erfindungsgemäße Endgehäuse präzise auf die Anforderungen einzustellen, die je nach Einsatzstelle vorliegen.

Als besonders vorteilhaft hat es sich erwiesen, wenn die Neigung, die die Flanscheinheit gegenüber der Mittelachse des Abschlusselementes aufweist, bei 45° liegt. Das Endgehäuse kann dadurch eingesetzt werden in allen Fällen, in denen der Winkel zwischen Mittelachse des Abschlusselementes und des Winkelementes des Kabelführungsrohres zwischen 0° und 90° liegt.

Unter konstruktiven Gesichtspunkten wird vorgeschlagen, die Flanscheinheit verdrehbar auszugestalten und sie insbesondere mit einer in Radialrichtung vorspringenden Kreisscheibe an einem der genannten zwei Teile zu versehen und mit einer diese Kreisscheibe aufnehmenden Ringnut, die an dem anderen der genannten zwei Teile vorliegt.

Es ist so möglich, entweder am Abschlusselement oder auch an dem Kabelführungsrohr eine kreisförmige Flanschführung vorzusehen, die dann am Kabelführungsrohr oder aber am Abschlusselement in einer korrespondierenden Ringnut gehalten wird. Eine derartige Kreisscheiben/Ringnut-Kombination ermöglicht insbesondere auch eine stufenlose Veränderbarkeit des oben diskutierten Winkels zwischen seinen Grenzlagen.

Um eine Fixierung des eingestellten Winkels zu erzielen, wird erfindungsgemäß vorgeschlagen, in dem die Ringnut aufweisenden Teil ein gegen die Kreisscheibe drückbares Fixierrohr vorzusehen.

Durch das Fixierrohr kann auf die Kreisscheibe ein Druck ausgeübt werden, durch den sie in ihrer Lage innerhalb der Ringnut festgehalten wird.

Vorteilhafterweise wird das Fixierrohr an dem Abschlusselement vorgesehen und ist in eine am Abschlusselement vorgesehene Aufnahme verlängert. Die Aufnahme ist dabei an dem der Ringnut in Axialrichtung entgegengesetzten Ende des Abschlusselementes vorgesehen.

Indem das Abschlusselement mit dieser Aufnahme an einem Gegenstück, sei es einem Stecker- oder Buchsenelement, sei es eine Gehäusedurchführung o. ä. befestigt wird, wird innerhalb der Aufnahme auf das Fixierrohr eine Kraft ausgeübt, die dann auf die Kreisscheibe übertragen wird und diese in ihrer Position innerhalb der sie umgebenden Ringnut festlegt.

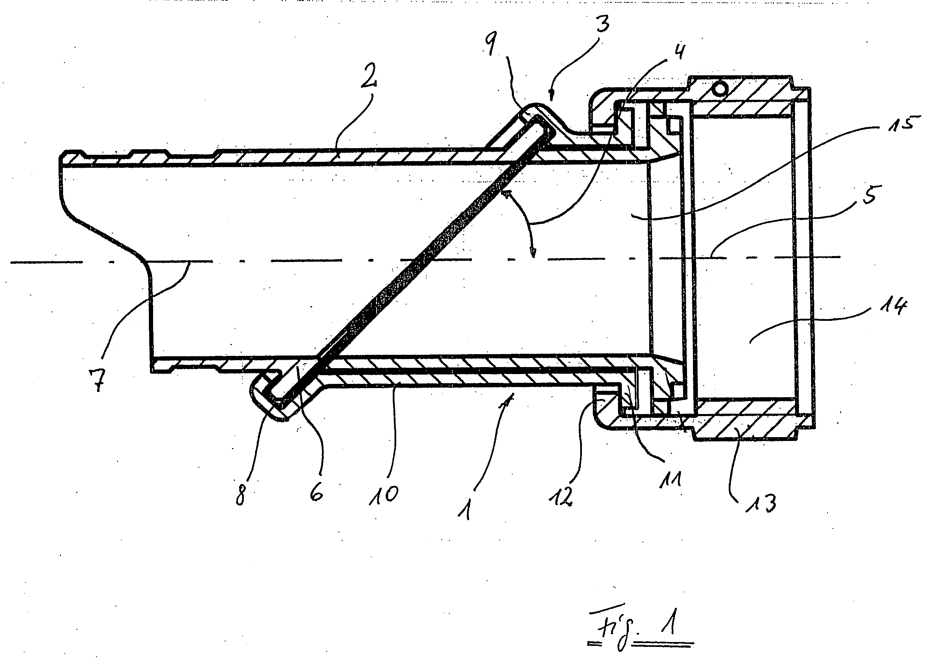

Weitere Vorteile und Merkmale der Erfindung ergeben sich aus der nachfolgenden Beschreibung eines Ausführungsbeispiels. Dabei zeigt
Figur 1 einen Schnitt durch ein erfindungsgemäßes Endgehäuse.

In Figur 1 erkennt man den Schnitt durch ein erfindungsgemäßes Endgehäuse. Dieses weist ein Abschlusselement 1 und ein sich an dieses anschließendes Kabelführungsrohr 2 auf.

Es ist zu erkennen, dass das Abschlusselement 1 und das Kabelführungsrohr 2 als zwei separate Teile hergestellt sind. Diese sind durch eine Flanscheinheit 3 miteinander verbunden.

Bei der im hier dargestellten Beispiel gezeigten Flanscheinheit weist diese einen Einbauwinkel 4 von etwa 45° zu einer Mittelachse 5 des Abschlusselementes 1 auf.

Die Flanscheinheit 3 besteht zum einen aus einer in Radialrichtung vorspringenden Kreisscheibe 6, die im hier dargstellten Beispiel einstückig an dem Kabelführungsrohr 2 ausgebildet ist und gegenüber der Mittelachse 7 des Kabelführungsrohres 2 einen Winkel entsprechend dem Einbauwinkel 4 von im hier vorliegenden Fall 45° einschließt.

Nur der guten Ordnung halber sei erwähnt, dass die Kreisscheibe 6 kragenartig ausgebildet ist und in ihrem mittleren Bereich selbstverständlich nicht geschlossen ist sondern ein Loch enthält, das in seinen Abmessungen den freien Querschnitt des Kabelführungsrohres 2 nicht beeinträchtigt.

Die Kreisscheibe 6 ist an ihrem äußeren Rand in einer Ringnut 8 aufgenommen, die als einstückig angeformtes Teil der Flanscheinheit 3 am Abschlusselement 1 vorgesehen ist. Diese Ringnut 8 hat einen außen liegenden Rand 9, der nach Einsetzen der Kreisscheibe 6 in die Ringnut 8 umgebogen und damit verschlossen wird, so dass die Kreisscheibe 6 innerhalb der Ringnut 8 festgehalten wird. Anstelle dieses nach innen umgebogenen Randes 9 kann alternativ auch ein Spreng- bzw. Sicherungsring vorgesehen sein.

Im hier dargestellten Beispiel ist die Ringnut 8 an einem Ende eines Außenrohres 10 vorgesehen, das an seinem der Ringnut 8 gegenüberliegenden Ende einen Halteflansch 11 aufweist, der radial nach außen vorspringt. Dieser Halteflansch 11 korrespondiert mit einem Arretierring 12, der in Radialrichtung nach innen vorstehenden an einer Überwurfmutter 13 vorgesehen ist. Auch hier kann statt des angeformten Arretierringes 12 alternativ ein Spreng- bzw. Sicherungsring vorgesehen sein.

Die genannte Überwurfmutter 13 wird in Richtung der Mittelachse 5 des Abschlusselementes 1 über ein Gewinde geschraubt, das im hier vorliegenden Beispiel nicht dargestellt ist und zu einem (ebenfalls nicht dargestellten) Gegenstück gehört, beispielsweise einem Steckergehäuse, einem Buchsengehäuse o. ä.

Dieses Gegenstück drückt dabei in der von der Überwurfmutter 13 in ihrem Inneren gebildeten Aufnahme 14 in Axialrichtung gegen ein Fixierrohr 15. Dieses wird in Axialrichtung innerhalb des Außenrohres 10 leicht verschoben und drückt mit seinem der Aufnahme 14 abgewandten Ende gegen die Kreisscheibe 6 des Kabelführungsrohres 2, die damit gegen den Rand 9 gedrückt wird. So wird die Kreisscheibe 6 in ihrer Stellung innerhalb der Ringnut 8 festgelegt.

Es sei noch erwähnt, dass das Fixierrohr an seinem der Kreisscheibe 6 zugewandten Ende eine Abschrägung aufweist, die in ihrem Winkel dem Einbauwinkel 4 entspricht.

Mit der hier beschriebenen Vorrichtung ist es also nun möglich, durch das Innere des Kabelführungsrohres 2 und des Fixierrohres 15 hindurch ein Kabel oder eine andere Art elektrischen Leiters zu der Aufnahme 14 des hier dargestellten Endgehäuses zu führen. Dabei ist über das Kabelführungsrohr 2 an seinem der Flanscheinheit 3 abgewandten Ende auch ein (hier nicht dargestelltes) Kabelkanalrohr schiebbar.

Durch eine Verdrehung der Kreisscheibe 6 innerhalb der Ringnut 8 wird der in der Figur 1 dargestellte geradlinige Verlauf zwischen der Mittelachse 7 des Kabelführungsrohres 2 und der Mittelachse 5 des Abschlusselementes 1 verändert. Damit kann mit dem hier dargestellten Endgehäuse eine beliebige Winkelstellung zwischen Abschlusselement 1 und Kabelführungsrohr 2 erzeugt werden.

Wird dann das Abschlusselement mit seiner Aufnahme 14 auf einen Stecker, ein Gewinderohr o. ä. aufgesetzt, so drückt dieses dann das innen liegende Fixierrohr 15 gegen die verdrehte Kreisscheibe 6 und fixiert so die gewünschte Winkelstellung.

Es ist somit möglich, unterschiedliche Winkelstellungen mit demselben Endgehäuse zu erzeugen und es ist nicht mehr notwendig, für unterschiedliche Winkel eine Vielzahl von unterschiedlichen Endgehäusen vorzusehen.

Es sei an dieser Stelle noch darauf hingewiesen, dass die hier dargestellte Bauform die bevorzugte Ausführungsform ist. Es ist aber auch möglich, die Kreisscheibe 6 am Abschlusselement 1 vorzusehen und die korrespondierende Ringnut 8 demgemäß am Kabelführungsrohr 2.

## Patentansprüche

1. Endgehäuse für ein Kabel
mit einem Abschlusselement (1) und einem sich an dieses anschließenden Kabelführungsrohr (2), wobei
das Abschlusselement (1) und das Kabelführungsrohr (2) als zwei Teile ausgeführt sind, die an einer gegenüber einer Mittelachse (5) des Abschlusselementes (1) geneigten Flanscheinheit (3) miteinander verbunden sind und wobei die Flanscheinheit (3) eine in Radialrichtung vorspringende Kreisscheibe (6) an einem der genannten zwei Teile sowie eine diese aufnehmende Ringnut (8) am anderen der genannten zwei Teile aufweist,
**dadurch gekennzeichnet,**
**dass** in dem anderen Teil ein gegen die Kreisscheibe (6) drückbares Fixierrohr (15) vorgesehen ist.

2. Endgehäuse gemäß Anspruch 1,
**dadurch gekennzeichnet,**
**dass** das andere Teil das Abschlusselement (1) ist und sich das Fixierrohr (15) bis in eine Aufnahme (14) des Abschlusselementes (1) erstreckt.

3. Endgehäuse gemäß Anspruch 1,
**dadurch gekennzeichnet,**
**dass** die Neigung der Flanscheinheit (3) gegenüber der Mittelachse (5) etwa 45° beträgt.

## Claims

1. An end housing for a cable with a closure element (1) and a cable guide tube (2) adjoining it, wherein the closure element (1) and the cable guide tube (2) are constructed as two components which are connected together at a flange unit (3), which is inclined with respect to a central axis (5) of the closure element (1) and wherein the flange unit (3) includes a circular disc (6), which projects in the radial direction, on one of the two components, and an annular groove (8) receiving it on the other of the said two components **characterised in that** a fixing tube (15) is provided in the other component which is pressable against the circular disc (6).

2. An end housing as claimed in Claim 1, **characterised in that** the other component is the closure element (1) and the fixing tube (15) extends into a receptacle (14) in the closure element (1).

3. An end housing as claimed in Claim 1, **characterised in that** the inclination of the flange unit (3) with respect to the central axis (5) is about 45°.

## Revendications

1. Boîtier terminal pour un câble,
comprenant un élément de fermeture (1) et un tube de guidage de câble (2) se raccordant à celui-ci, dans lequel
l'élément de fermeture (1) et le tube de guidage de câble (2) sont réalisés sous la forme de deux parties qui sont reliées ensemble à une unité de bride (3) inclinée par rapport à un axe médian (5) de l'élément de fermeture (1) et dans lequel l'unité de bride (3) présente un disque circulaire (6) en saillie dans la direction radiale sur une desdites deux parties ainsi qu'une rainure annulaire (8) recevant celui-ci sur l'autre desdites deux parties,
**caractérisé en ce**
**qu'**un tube de fixation (15) pouvant être pressé contre le disque circulaire (6) est prévu dans l'autre partie.

2. Boîtier terminal selon la revendication 1,
**caractérisé en ce**
**que** l'autre partie est l'élément de fermeture (1) et le tube de fixation (15) s'étend jusqu'à un logement (14) de l'élément de fermeture (1).

3. Boîtier terminal selon la revendication 1,
**caractérisé en ce**
**que** l'inclinaison de l'unité de bride (3) par rapport à l'axe médian (5) est d'environ 45°.
